Europäisches Patentamt

European Patent Office

Office européen des brevets

(11) Publication number: **0 200 198 B1**

# EUROPEAN PATENT SPECIFICATION

(45) Date of publication of patent specification: **19.06.91**　(51) Int. Cl.⁵: **G06F 12/06**

(21) Application number: **86105882.4**

(22) Date of filing: **29.04.86**

(54) An arrangement for expanding memory capacity.

(30) Priority: **02.05.85 US 729610**

(43) Date of publication of application:
**05.11.86 Bulletin 86/45**

(45) Publication of the grant of the patent:
**19.06.91 Bulletin 91/25**

(84) Designated Contracting States:
**AT BE CH DE FR GB IT LI LU NL SE**

(56) References cited:
**EP-A- 0 121 381**
**US-A- 4 330 825**

**IBM TECHNICAL DISCLOSURE BULLETIN, vol.
23, no. 8, January 1981, pages 3559-3561,
New York, US; D.W. GRIMES: "Automatic
storage quantity characterization feature"**

**IBM TECHNICAL DISCLOSURE BULLETIN, vol.
25, no. 10, March 1983, pages 5218-5219, New
York, US; D.W. GRIMES et al.: "Encoded main
storage size jumpers"**

(73) Proprietor: **DIGITAL EQUIPMENT CORPORA-
TION**
**146 Main Street**
**Maynard, MA 01754(US)**

(72) Inventor: **Lipcon, Jesse B.**
**9 Deerfoot Trail**
**Harvard, MA 01451(US)**
Inventor: **Maskas, Barry A.**
**40-10, Royal Crest Drive**
**Marlboro, MA 01752(US)**

(74) Representative: **Patentanwälte Grünecker,
Kinkeldey, Stockmair & Partner**
**Maximilianstrasse 58**
**W-8000 München 22(DE)**

## Description

The invention relates to a self-configuring memory circuit as indicated in the precharacterizing part of claim 1.

In such a prior art memory circuit ("Automatic Storage Quantity Characterization Feature" in IBM TDB, Volume 23, No. 8, January 1981, pages 3,559-3,561) the signal generator in each memory module comprises a logic circuit having the same circuit arrangement in each of the plurality of memory modules. The receiving means comprises at least 2 and preferably 3 inputs of the logic circuit which are connected via individual resistors with a voltage of positive polarity. The means for outputting the output signal comprises at least 2 and preferably 3 outputs which are connected with the logic circuit. The logic circuit is constructed such that at said outputs a binary code is present which adds a binary 1 to the binary number as represented by the binary signal as provided at the inputs of the receiving means. Consequently, in this prior art memory circuit each of the plurality of memory modules has the same memory capacity or memory size and the total size of all said memory modules is determined by the number of memory modules serially connected to said interconnect means.

Another prior art memory system (EP-A-0 121 381) includes at least one or more memory module boards identical in construction and a central computer board containing the control circuits for controlling memory operations. Each board plugs into the main board and includes a memory section having a number of rows of memory chips and an identification section containing circuits for generating signals indicating the board density and the type of memory parts used in constructing the board's memory section. The memory density identification sections output memory size signals in parallel to the mother board comprising the central processing unit. Said memory density identification section comprises jumpers to be manually inserted in accordance with the memory density.

It is the object of the invention to improve a memory circuit as indicated in the precharacterizing part of claim 1 such that a plurality of memory modules can be serially connected by the interconnect means with one another and the central processing unit when the memory modules have different memory sizes wherein the one memory module least distant from the central processing unit is able to indicate the total size of all said memory modules to the central processing unit.

Said object is solved in accordance with the invention by the features as claimed in the characterizing part of claim 1.

In accordance with the invention each memory module can have a different memory size which is indicated by the predetermined binary code of the signal as generated by the signal generator of each of the plurality of memory modules. Furthermore, by means of the combining means the signal as generated by the signal generator of the respective memory module is combined with an input signal indicating the total size of all the memory modules located at a greater distance but next to said respective memory module. The combined signal is then output by the respective memory module directly to the central processing unit or via further memory modules which are located between the respective memory module and the central processing unit. Consequently, the one memory module least distant from the central processing unit outputs a combined signal indicating to the central processing unit the total size of all the memory modules serially connected to the central processing unit.

Further developments of the invention are claimed in the subclaims.

Brief Description of the Drawings

The objects and features of the present invention will be better understood in view of the following description studied in conjunction with the drawings wherein:

Figure 1 is a block, schematic diagram showing local memory control circuitry and decoding circuitry employed by the dataprocessing system;

Figure 2 is a block, schematic diagram depicting an expandable memory circuit card plugged into a first slot;

Figure 3 is a table of possible coded signals generated by a circuit card or by circuit cards; and

Figure 4 depicts a logic scheme to implement the table of Figure 3.

Detailed Description of the Preferred Embodiments

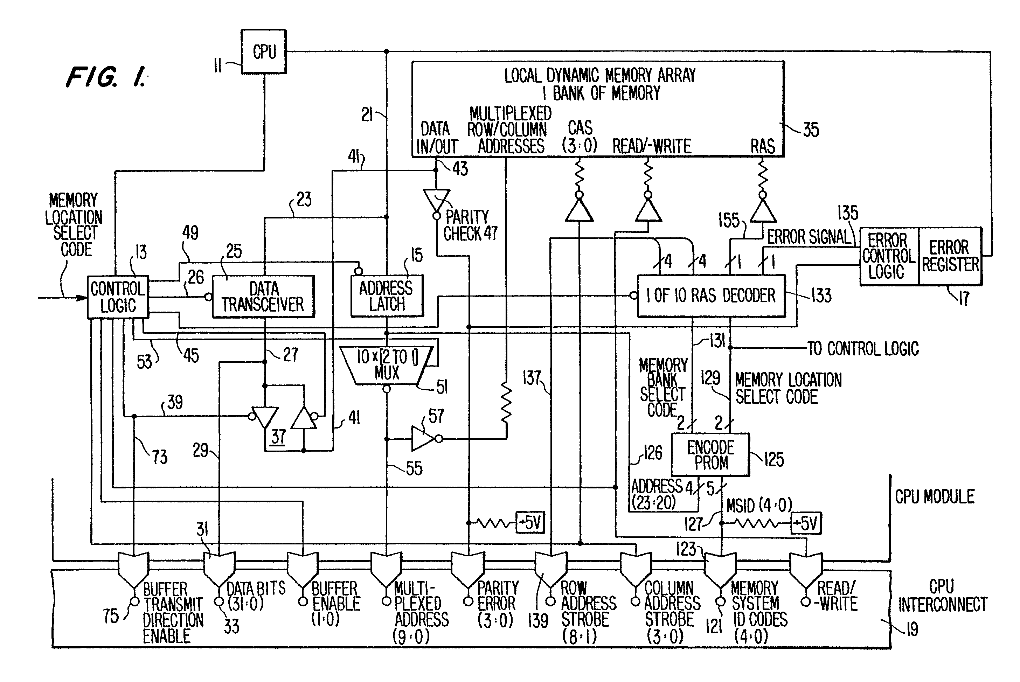

Consider Figure 1. In Figure 1 there is shown a CPU 11 (Central Processor Unit) of a data processing system. It should be understood that a great deal of the hardware associated with a normal data processing system is not shown, described or claimed hereinafter because such hardware is not related to the present invention. The control logic 13 can be any one of a number of logic circuit devices which responds to a command signal from the CPU to generate control signals or enable signals at the proper times and transmit such signals to the correct components. In a preferred embodiment the control logic 13 is a 825105AN Field Programmable Logic Sequencer, F174, F74, F537, F32 manufactured by Signetics or Fairchild.

When data signals are transmitted from, or to, the CPU 11 they are transmitted along the lines 21 and 23, through the data transceiver 25, along lines 27 and 29, through the connector 31 to the lines (depicted as terminal 33) in the CPU interconnect bus 19. It should be understood that the lines such as 21 and 23 as well as the terminals, such as terminal 33, represent a plurality of lines which carry a group of signals in parallel. Returning to the discussion of data transfer and the CPU, we find that if data is being transferred from some part of the system to the CPU 11, such data passes from the lines of the bus 19, at terminals 33, through connector 31, along lines 29 and 27, through data transceiver 25, along lines 23 and 21 into the CPU 11. The data trancceiver 25 is a bidirectional data path device and in the preferred embodiment is a F245 manufactured by Fairchild. It should be noted that data transceiver 25 is enabled by a control signal on line 26 from the control logic 13.

When the CPU 11 is transmitting data signals to the memory array on memory array card 35, the data signals pass from the data transceiver 25 to the data transceiver 37. The "data in" path of data transceiver 37 is enabled by a control signal on line 39. The data signals leave the data transceiver 37, along lines 41 to the data in/out port 43 of the memory array card 35. When data signals are transmitted from the memory array on the memory array card 35, such data signals pass in the opposite direction from that just described) along lines 41, through the "data out" path of the data transceiver 37, either back to the data transceiver 25 (if the data signals are going to the CPU 11) or along lines 29. The "data out" path of data transceiver 37 is enabled by a control signal on line 45 from the control logic 13.

It should be understood that in a preferred embodiment the data transceiver 37 is a AM29853 manufactured by Advanced Micro Devices, and that the parity check circuit 47 is part of transceiver 37. When data signals are transmitted through the data transceiver 37 a parity value is generated for every eight bits. In the preferred embodiment the system is a 32 bit word system and for every eight bits (eight bits to a byte) a parity value is generated. When data transceiver 37 has generated a parity value it is transmitted to the parity check device which compares the trailing parity value of each byte from memory with the generated parity value from transceiver 37. The parity generation and check are not involved in the present invention but have been described to provide a somewhat complete description of the system so that the invention can be better appreciated.

When the CPU 11 transmits address signals, they are sent to the address latch 15. In the preferred embodiment, there is a need for ten bits of information for a column address and ten bits of information for a row address. In addition (as will be better understood hereinafter) there is a need for four bits of information to determine what memory card is to be addressed and what bank of memory on that card. Hence there is a need for twenty four bits of information in an address. The twenty four bits are transmitted to the address latch 15. The address latch 15 is enabled by a control signal, from the control logic 13, on line 49. The low order twenty bits are transmitted, ten bits at a time, through the multiplexer (MUX) 51. The MUX 51 multiplexes the groups of ten bits in response to a control signal on line 53.

The bursts of ten bits (the column and row addresses) are transmitted along lines 55 to the CPU interconnect bus 19 and simultaneously to the memory array card 35, through the buffer 57. The column and row address signals are held in latches in memory devices on the local memory array card 35 and likewise in memory devices on the expandable memory circuit cards with one latch for each bank of memory. It is the generation of the row address strobe signal (RAS) that selects the latch that is to be activated and therefore the bank of memory which the program intends to address.

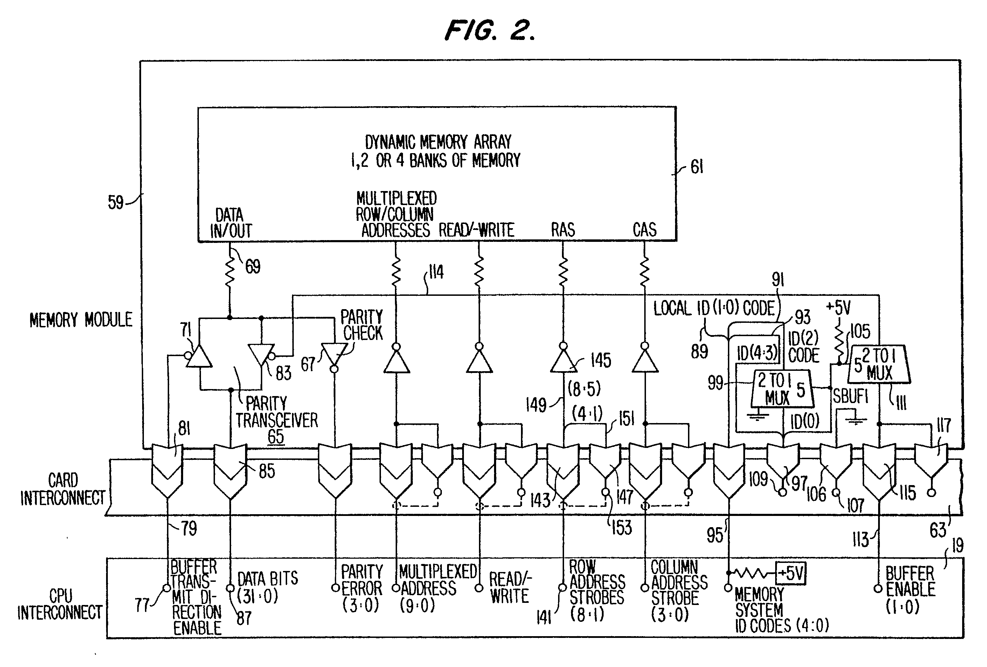

In determining the generation of the RAS signal let us consider Figure 2 along with Figure 1. In Figure 2 there is shown an expandable memory circuit card 59. On the expandable memory circuit card 59 there is shown banks of memory 61. An expandable memory circuit board, such as board 59, may have, in a preferred embodiment, any one of three different amounts of memory. The card 59 may have one, two, or four banks of memory. Note that the expandable memory circuit card 59 is plugged into a card interconnect bus 63 as well as into the CPU interconnect bus 19. Actually the card bus 63 and the CPU bus 19 are a one bus device and there are some lines in the bus which are dedicated to interconnecting the cards.

A number of the circuits used with the expandable memory circuit card are similar to the circuits used with the memory array card 35 described in connection with the discussion above related to Figure 1. For instance the parity transceiver 65 and the parity check circuit 67 are both part of a AM29853 manufactured by Advanced Micro Devices. When data is transmitted into the banks of memory 61 through the data in/out port 69, such data passes through the buffer 71 of transceiver 65. Buffer 71 is enabled by the buffer transmit direction enable signal which is transmitted from the control logic 13 in Figure 1, along line 73, to the CPU interconnect bus 19, at terminals 75, from the terminals 77 in Figure 2, along line 79, through the connector 81 to the gate terminal on buffer 71. When data signals are transmitted from the banks of memory 61, from the data in/out port 69, such data passes through the buffer 83, through the connector 85, to the bus 19, at the terminals 87. The enable signal to the buffer 83 shall be discussed below.

Before proceeding further with a description of the circuitry of Figure 2, let us consider the role of the coded signals generated by the expandable memory circuit cards. It should be understood that, in a preferred embodiment, there are two slots into which an expandable memory circuit card can be plugged. The first slot is considered the high order slot while the second slot is considered the low order slot. The same cards can be plugged into either slot.

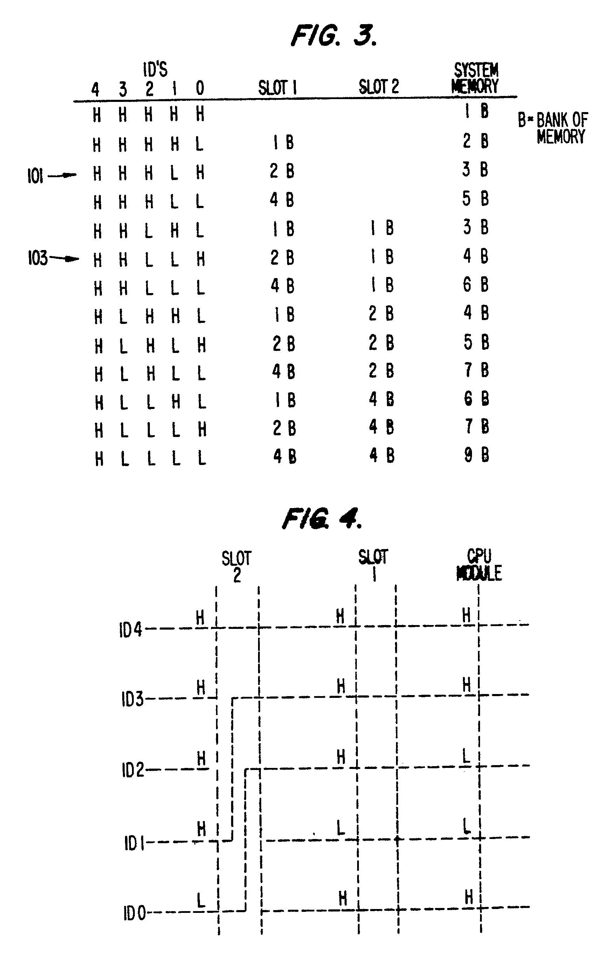

When an expandable memory circuit card is made up it is equipped with either one bank of memory, or two banks of memory, or four banks of memory. Depending on the amount of memory certain voltages are applied to five lines on the card. In Figure 2, the lines 89 represent the zero and one identification (ID) bits, while line 91 represents the "two" identification bits, and the lines 93 represent the third and fourth ID bits. For instance as can be seen from Figure 3, if a card has one bank of memory, then its four through zero bit lines will be HHHHL, where H is high and L is low. The power inputs are not shown in Figure 2 but it should be understood that the high (H) and low voltages are applied to the lines 89, 91, and 93 from the back of the board. The provision of high and low voltages to the lines 89, 91 and 93 can be accomplished in any number of ways.

If there is only one expandable memory circuit card employed it must be located in the first slot and the five output signals on lines 95 will be the same as generated from the power sources on the lines 89, 91 and 93. However, if a second card is employed, it will be located in slot 2 and will transmit signals to the connector 97. The fourth ID bit signal from the lower order card (i.e. the card in the second slot) will be coupled through the connector 97 to the fourth ID bit on one of the two lines 93. If the fourth ID bit from the second card is low then the combined fourth ID bit will be low and hence the fourth ID bit of the lines 95 will be low. The one ID bit from the second card is coupled to the third ID bit of the first card and if either the one ID bit from the second card or the third ID bit from the first card is low, then the combined third ID bit is low on the lines 95. The zero ID bit from the second card is transmitted to the MUX 99. Before proceeding, it should be recognized that if the card 59 were placed in the second slot the MUX 99 would not be activated to pass the zero ID bit to the second ID bit of the first card. Hence the need for MUX 99 is that the card 59 may be plugged into the first slot. Considering again the zero ID bit from the second card, we find that it is connected to the MUX 99, which is activated since the card 59 is in the first slot. Accordingly the zero ID bit is coupled to the second ID bit of the first card and if either be Low (1), then the second ID bit on lines 95 will be low. The possible combinations are numerous and a study of Figure 3 and 4 provides a basis for better appreciation.

In Figure 3 it can be seen that if there are no cards present only the local memory of Figure 1 will be present and in a preferred embodiment the local memory has only one bank of memory. By way of example, note that if the first card were to have two banks of memory its five ID bits would be HHHLH (see identifier 101). Also by way of example note that if a second card were employed and it had one bank of memory, the combined ID signals would be HHLLH (see identifier 103). The logic for the implementation can be seen in Figure 4. If we enter the code for a one bank card from Figure 3 (i.e. HHHHL) into the second slot in Figure 4 and we enter the code for a two bank card from Figure 3 (i.e. HHHLH) into the first slot in Figure 4 then we can follow the logic. Note in Figure 4 that at the four ID level the lines from the second and first card are connected. In our example both signals are H so there is an H at the CPU, or on lines 95. In the three ID level, the signal from the second slot goes nowhere, but the three ID level of the first card is tied to the one ID level of the second card. Since the one ID level of the second card is H and the three ID level of the first card is H, there will be an H on the three ID line, of the lines 95, to the CPU. In Figure 4 it is apparent that the two ID level of the second card goes nowhere but the two ID level of the first card is tied to the zero level of the first card. Since there is an L signal on the zero ID level of the second card it will negate the high signal on the two ID level of the first card signal and hence there will be an L signal on the two ID line to the CPU. From Figure 4 it is apparent that the one ID level and zero ID level of the first card are not influenced by the signals from the second card and hence they remain unchanged. Accordingly there is an L signal on the one ID line to the CPU and H on the zero ID lines to the CPU. It follows that our combined code to the CPU is HHLLH.

If we examine Figure 3, we find that the output to the CPU shown in Figure 4 matches the comined output 103 in Figure 3. Every combination of banks of memory is handled in Figure 3 and every combination can be implemented by the logic of Figure 4.

If we again consider the circuitry of Figure 2 we can understand that signals on lines 95 represent a combined amount of memory available because of the presence of two expandable memory circuit cards.

Note in Figure 2 that the MUX 99 is activated by the signal SBUFI on line 105. If the card in the first slot, SBUFI is high. However, when the card is put in the second slot, the card interconnect 63 provides a connector between terminals 107 and 109, so that line 105 goes low (L) and the MUX 99 is not activated.

The MUX 111 operates in two ways to accomodate two data paths. When the card 59 is in the first slot there is a high signal on line 105 to cause MUX 111 to accomodate a first data path. When card 59 is in the second slot the ground signal, through connector 106, through terminal 107 to terminal 109, provides a low signal on line 105. When there is a low signal on line 105 the MUX 111 accomodates a second data path. In the second slot the card interconnect provides a connection between terminals 107 and 109. Now MUX 111 handles the buffer signals on lines 113. The buffer enable signals will appear on lines 113 as 10 or 01. If the buffer enable signals appear as 10 then those signals are sent to the MUX 111 from connector 115 and to a similar MUX 111 in the second card through connector 117. However, if MUX 111 in the first card passes the ONE bit on line 119 to enable the buffer 83 on the first card, then the ONE bit of the 10 enable signals will be blocked by the MUX 111 in the second card. If the buffer enable signals were 01 then the MUX 111 of the second card will pass the ONE bit to enable the buffer 83 on the second card. The ONE bit of 01 would be blocked by the MUX 111 of the first card.

Consider now the role of the five coded signals on lines 95 after they have been transmitted over the bus 19 to the circuitry of Figure 1. In Figure 1, the five coded bits enter the terminal lines 121 and are transmitted through the connector 123, to the encode PROM 125. The encode PROM 125, is a preferred embodiment, is a AM27513A manufactured by Advanced Micro Devices.

It should be noted at this point, that in the preferred embodiment, the ability to have each memory array card be one of two dynamic memory density technologies is facilitated by the fifth code from line 127. This extra code expands the possible memory array card combinations to include a 2 bank arrangement of the higher density dynamic memory devices. However, Figure 3 is concerned with only one memory density technology in a one, two, or four bank arrangement, and requires 13 permutations of the ID codes. With the fifth ID code implemented, 21 permutations of the ID codes are necessary.

The encode PROM 125 is loaded to (1) receive every possible combination of coded signals from lines 126 and 127 that could be valid or invalid, and (2) produce the correct four bit output signals. The two bits on lines 129 provide the following information: the memory sought is the local memory 35; or the memory sought is the memory array 61 of the first card; or the memory sought is the memory array 61 of the second card; or the address sought is invalid. The two bits on lines 131 provide information indicating which bank of memory is sought.

The four bits are transmitted to the 1 of 10 RAS Decoder 133. The RAS Decoder 133 provides 1 of 10 signals. Eight of those signals correspond to the eight possible banks of memory on the two expandable memory circuit cards. It will be recalled that an expandable memory card can have one, two or four banks of memory. If each of the two expandable memory circuit cards had four banks of memory then that would constitute eight possible banks of memory. As mentioned earlier, eight of the possible ten output signals from RAS Decoder 133 are directed to those eight possible banks. The ninth signal from the RAS Decoder is directed to the local memory 35. The tenth is an error signal (invalid address) on line 135.

The eight possible signals are transmitted over eight separate lines 137 through the connector 139 to the CPU interconnect bus 19. The eight possible signals are received from bus 19 through the terminals 141. The eight possible signals are transmitted through the connector 143. The eight lines are separated after leaving the connector 143. Four of the lines are connected to the buffers 145 and the remaining four lines are cornected to the connectors 147. It should be understood that although there are ten lines emerging from the RAS Decoder 133, there is only one signal present. If that one signal is present on the lines 149 it will be transmitted to its associated latch to activate that latch so that the column and row address as stored therein can operate on the correct bank of memory. On the other if that one signal emanating from the RAS Decoder 133 is on lines 151, that signal will be sent through the connector 147 to the card interconnect bus 63. The terminals 153 are connected through the card interconnect 63 to a connector 143 on the second card (shown in phantom). Hence, if that one signal from RAS Decoder 133 were on the lines 151 it would serve to activate an associated latch on the second card. If that one signal from RAS Decoder 133 were on line 155 it would activate a latch on the local memory card 35.

If there were not four banks of memory on each of the two cards then the coded signals into the encode PROM would generate output signals from the RAS Decoder 133 which would reduce the number of possible signals to the number of banks present. If the program called for an address beyond the limit present then such an address would appear as an invalid address.

The drawings show a CAS strobe signal having four bits. In a preferred embodiment the memory is organized into four columns of eight bits plus a parity bit. The CAS strobe is directed to one of those four columns. The CAS strobe signal is generated by the control logic 13 in response to the program knowing that in accordance with the organization of the memory that a certain address will be (by way of example) in the third column of eight bits.

The present invention enables the user to readily expand the memory by merely plugging in a universal card. The CPU looks at the memory including the added memory as one large memory. By having the cards generate coded signals, indicating memory capacity and by having the cards combine their coded signals to provide a combined set of coded signals, the present arrangement provides intelligence to the data processing system to enable the system to reliably and easily address all of the memory available. It should also be understood that while the present system has been described with one, two, or four banks of memory per card, the memory units could be expanded to a greater number of banks and there could be more than two card slots available, for instance, three or four card slots. There could also be a mixture of dynamic memory technology devices such that bank sizes could vary depending on the array technology.

**Claims**

1. A self-configuring memory circuit;

    which is accessed by a central processing unit (11) comprising;

    interconnect means (19,) connecting a plurality of separate memory modules (59) with the central processing unit (11);

    said plurality of memory modules (59) are serially connected to said interconnect means (19, 63), at locations which are at increasing distances from the central processing unit (11); wherein

    each memory module (59) includes:

    a signal generator for generating a signal having a predetermined binary code;

    receiving means (97) for an input signal provided as an output signal by the one memory module (59) located at a greater distance but next to said receiving memory module (59); and

    means (95) for outputting an output signal to said interconnect means (19, 63) and interface means (125) coupled to the central processing unit (11) and indicating to same a total size of all said memory modules (59) based on the present output signal provided from the memory module (59) least distant from the central processing unit (11) and selecting the memory module (59) which corresponds to an address signal from the central processing unit (11);

    **CHARACTERIZED IN THAT**

    each of said memory modules (59) has one of a plurality of memory sizes and said signal generator of each of said memory modules (59) indicates said one of said plurality of memory sizes of said memory module (59) by said predetermined binary code and includes combining means (99) combining the received input signal and the signal generated by its own signal generator to form a combined signal which is outputted as said output signal.

2. The self-configuring memory circuit as claimed in claim 1,

    **CHARACTERIZED IN THAT**

    each of said memory modules (59) also includes a location signal generator for indicating the location of the memory module (59) with respect to the central processing unit (11) and

    said combining means (99) is connected with said location signal generator in order to combine said location signal with the size signal to form said combined size signal.

3. The self-configuring memory circuit as claimed in claim 1 or 2,

    **CHARACTERIZED IN THAT**

    Said interface means includes a PROM (125) having address inputs coupled to said interconnect means (19, 63) to receive said combined size signals and to output signals identifying each of said memory modules (59).

4. The self-configuring memory circuit as claimed in claim 3,

    **CHARACTERIZED IN THAT**

a decoder (133) is coupled to said PROM (125) to receive said PROM output signals, said decoder (133) including selection means outputting selection signals for access to each of said memory modules (59) by the central processing unit (11).

5. The self-configuring memory circuit as claimed in one of the claims 1 to 4,

**CHARACTERIZED IN THAT**

said memory modules (59) each contains at least one memory bank (61) and

each of said memory module size signals indicates the number of memory banks (61) contained in the corresponding memory module (59).

6. The self-configuring memory circuit as claimed in one of the claims 1 to 5,

**CHARACTERIZED IN THAT**

said interconnect means (19, 63) includes:

a plurality of mounting slots (Fig. 4; SLOT 1, SLOT 2) each including a set of pin connectors electrically connecting said memory modules (59) when inserted into said mounting slots.

**Revendications**

1. Circuit de mémoire à autoconfiguration, qui est accessible par une unité centrale de traitement (11) comprenant :
Des moyens d'interconnexion (19) connectant une pluralité de modules de mémoire séparés (59) avec l'unité centrale de traitement (11);
Ladite pluralité de modules de mémoire (59) est connectée en série auxdits moyens d'interconnexion (19, 63), à des positions qui sont à des distances croissantes à partir de l'unité centrale de traitement (11); dans lequel
Chaque module de mémoire (59) comporte :
Un générateur de signal pour générer un signal ayant un code binaire prédéterminé;
Des moyens récepteurs (97) pour un signal d'entrée fourni en tant que signal de sortie par le module de mémoire (59) positionné à une distance supérieure mais contigu audit module de mémoire récepteur (59); et
Des moyens (95) pour sortir un signal de sortie vers lesdits moyens d'interconnexion (19, 63) et des moyens d'interface (125) couplés à l'unité centrale de traitement (11) et indiquant à celle-ci une grandeur totale de tous lesdits modules de mémoire (59) basée sur le présent signal de sortie fourni à partir du module de mémoire (59) le moins distant de l'unité centrale de traitement (11) et sélectionnant le module de mémoire (59) qui correspond à un signal d'adresse en provenance de l'unité centrale de traitement (11);
Caractérisé en ce que chacun desdits modules de mémoire (59) a une parmi une pluralité de grandeurs de mémoire et ledit générateur de signal de chacun desdits modules de mémoire (59) indique ladite grandeur de ladite pluralité de grandeurs de mémoire dudit module de mémoire (59) par ledit code binaire prédéterminé et comporte des moyens de combinaison (99) combinant le signal d'entrée reçu et le signal généré par son propre générateur de signal pour former un signal combiné qui est sorti en tant que ledit signal de sortie.

2. Circuit de mémoire à autoconfiguration selon la revendication 1, caractérisé en ce que
Chacun desdits modules de mémoire (59) comporte aussi un générateur de signal de position pour indiquer la position du module de mémoire (59) par rapport à l'unité centrale de traitement (11); et
Lesdits moyens de combinaison (99) sont connectés avec ledit générateur de signal de position, afin de combiner ledit signal de position avec le signal de grandeur pour former ledit signal de grandeur combiné.

3. Circuit de mémoire à autoconfiguration selon la revendication 1 ou 2, caractérisé en ce que lesdits moyens d'interface comportent une mémoire PROM (125) ayant des entrées d'adresses couplées auxdits moyens d'interconnexion (19, 63) pour recevoir lesdits signaux de grandeur combinés et pour sortir des signaux identifiant chacun desdits modules de mémoire (59).

4. Circuit de mémoire à autoconfiguration selon la revendication 3, caractérisé en ce qu'un décodeur (133) est couplé à ladite mémoire PROM (125) pour recevoir lesdits signaux de sortie de la mémoire PROM, ledit décodeur (133) comportant des moyens de sélection sortant des signaux de sélection pour l'accès à chacun desdits modules de mémoire (59) par l'unité centrale de traitement (11).

5. Circuit de mémoire à autoconfiguration selon l'une des revendications 1 à 4, caractérisé en ce que
Lesdits modules de mémoire (59) contiennent chacun au moins un banc de mémoire (61); et

Chacun desdits signaux de grandeur des modules de mémoire indique le nombre de bancs de mémoire (61) contenus dans le module de mémoire correspondant (59).

6. Circuit de mémoire à autoconfiguration selon l'une des revendications 1 à 5, caractérisé en ce que lesdits moyens d'interconnexion (19, 63) comportent une pluralité de logements de fixation (fig. 4; LOGEMENT 1, LOGEMENT 2) comportant chacun un ensemble de connecteurs à broches connectant électriquement lesdits modules de mémoire (59) lorsqu'ils sont insérés dans lesdits logements de fixation.

**Ansprüche**

1. Speicherschaltung mit selbsttätiger Zusammenstellungseigenschaft,

   auf die eine zentrale Verarbeitungseinheit (11) Zugriff hat, mit

   Verbindungseinrichtungen (19, 63) zum Verbinden mehrerer getrennter Speichermodule (59) mit der zentralen Verarbeitungseinheit (11), wobei

   die mehreren Speichermodule (59) seriell mit den Verbindungseinrichtungen (19, 63) an Orten verbunden sind, die sich an sich vergrößernden Entfernungen von der zentralen Verarbeitungseinheit befinden, und wobei

   jeder Speichermodul (59) umfaßt:

   einen Signalgenerator zum Erzeugen eines Signals, das einen bestimmten Binärcode hat,

   Empfangseinrichtungen (97) für ein Eingangssignal, das als ein Ausgangssignal von dem einen Speichermodul (59) abgegeben wird, der sich an einer größeren Entfernung, jedoch nächst dem empfangenden Speichermodul (59) befindet, und

   eine Einrichtung (95) zum Angeben eines Ausgangssignals an die Verbindungseinrichtung (19, 63) sowie eine Schnittstelleneinrichtung (125), die mit der zentralen Verarbeitungseinrichtung (11) gekoppelt ist und an diese eine Gesamtkapazität aller dieser Speichermodule (59) aufgrund des vorliegenden Ausgangssignals angibt, das von dem Speichermopdul (59) abgegeben wird, der der zentralen Verarbeitungseinheit (11) am nächsten ist, und den Speichermodul (59) auswählt, der einem Adressensignal von der zentralen Verarbeitungseinheit entspricht,

**dadurch gekennzeichnet, daß**

jeder der Speichermodule (59) eine von mehreren Speicherkapazitäten hat und der Signalgenerator eines jeden der Speichermodule (59) diese eine der mehreren Speicherkapazitäten des Speichermoduls (59) durch den bestimmten Binärcode angibt und eine Verknüpfungseinrichtung umfaßt, die das empfangene Eingangssignal und das vom eigenen Signalgenerator erzeugte Signal verknüpft, um ein Verknüpfungssignal zu bilden, das als das Ausgangssignal abgegeben wird.

2. Speicherschaltung mit selbsttätiger Zusammenstellungseigenschaft nach Anspruch 1

   **dadurch gekennzeichnet, daß**

   jeder der Speichermodule (59) auch einen Orts-Signalgenerator zum Angeben des Ortes des Speichermoduls (59) in bezug auf die zentrale Verarbeitungseinheit (11) umfaßt und

   die Verknüpfungseinrichtung (99) mit dem Orts-Signalgenerator verbunden ist, um das Ortssignal mit dem Kapazitätssignal zu verknüpfen, um das verknüpfte Kapazitätssignal zu bilden.

3. Speicherschaltung mit selbsttätiger Zusammenstellungseigenschaft nach Anspruch 1 oder 2,

   **dadurch gekennzeichnet, daß**

   die Schnittstelleneinrichtung ein PROM (125) mit Adresseneingängen umfaßt, die mit den Verbindungseinrichtungen (19, 63) gekoppelt sind, um die verknüpften Kapazitätssignale zu empfangen und Signale abzugeben, die jeden der Speichermodule (59) identifizieren.

4. Speicherschaltung mit selbsttätiger Zusammenstellungseigenschaft nach Anspruch 3,

   **dadurch gekennzeichnet, daß**

   ein Dekoder (133) mit dem PROM (125) gekoppelt ist, um die PROM-Ausgangssignale zu empfangen, wobei der Dekoder (133) eine Auswahleinrichtung umfaßt, die Auswahlsignale zum Zugriff auf jeden der Speichermodule (59) durch die zentrale Verarbeitungseinheit (11) abgibt.

5. Speicherschaltung mit selbsttätiger Zusammenstellungseigenschaft nach einem der Ansprüche 1 bis 4,

**dadurch gekennzeichnet,** daß

die Speichermodule (59) jeweils mindestens eine Speicherbank (61) enthalten und

jedes der Speichermodul-Kapazitätssignale die Anzahl von Speicherbänken (61) angibt, die in dem zugeordneten Speichermodul (59) enthalten sind.

6. Speicherschaltung mit selbsttätiger Zusammenstellungseigenschaft nach einem der Ansprüche 1 bis 5,

**dadurch gekennzeichnet,** daß

die Verbindungseinrichtungen (19, 63) umfassen:

mehrere Halteschlitze (Fig. 4; Schlitz 1, Schlitz 2), die jeweils einen Satz von Stiftverbindern umfassen, die die Speichermodule (59) elektrisch verbinden, wenn sie in die Halteschlitze eingesetzt sind.

*FIG. I.*

LOCAL DYNAMIC MEMORY ARRAY
I BANK OF MEMORY

# FIG. 2.

## FIG. 3.

| 4 | 3 | ID'S 2 | 1 | 0 | SLOT 1 | SLOT 2 | SYSTEM MEMORY | |
|---|---|---|---|---|--------|--------|---------------|---|
| H | H | H | H | H |       |       | 1 B | B = BANK OF MEMORY |
| H | H | H | H | L | 1 B   |       | 2 B | |
| H | H | H | L | H | 2 B   |       | 3 B | |
| H | H | H | L | L | 4 B   |       | 5 B | |
| H | H | L | H | L | 1 B   | 1 B   | 3 B | |
| H | H | L | L | H | 2 B   | 1 B   | 4 B | |
| H | H | L | L | L | 4 B   | 1 B   | 6 B | |
| H | L | H | H | L | 1 B   | 2 B   | 4 B | |
| H | L | H | L | H | 2 B   | 2 B   | 5 B | |
| H | L | H | L | L | 4 B   | 2 B   | 7 B | |
| H | L | L | H | L | 1 B   | 4 B   | 6 B | |
| H | L | L | L | H | 2 B   | 4 B   | 7 B | |
| H | L | L | L | L | 4 B   | 4 B   | 9 B | |

101 → (row: H H H L H)
103 → (row: H H L L H)

## FIG. 4.

SLOT 2    SLOT 1    CPU MODULE

| | SLOT 2 | SLOT 1 | CPU MODULE |
|------|---|---|---|
| ID 4 | H | H | H |
| ID 3 | H | H | H |
| ID 2 | H | H | L |
| ID 1 | H | L | L |
| ID 0 | L | H | H |